# EUROPÄISCHE PATENTSCHRIFT

(11) **EP 0 571 794 B1**
(45) Veröffentlichungstag und Bekanntmachung des Hinweises auf die Patenterteilung: **12.03.1997**
(21) Anmeldenummer: 93107427.2
(22) Anmeldetag: 07.05.1993
(51) Int. Cl.: A01D 80/00, A01B 73/02

(54) **Landwirtschaftliche Arbeitsmaschine, besonders Kreiselheuwender**
Agricultural working machine, especially rotating hay tedder
Machine à travaille agricole, notamment faneuse rotatoire

(30) Priorität: 26.05.1992 DE 4217375
(43) Veröffentlichungstag der Anmeldung: 01.12.1993
(73) Patentinhaber: CLAAS SAULGAU GMBH, D-88340 Saulgau (DE)
(72) Erfinder: Jakobi, Wilhelm, W-7968 Saulgau-Bogenweiler (DE)

(56) Entgegenhaltungen:
- EP-A- 0 224 667
- DE-A- 1 782 631
- DE-A- 2 419 749
- DE-A- 3 713 474
- DE-A- 3 926 382
- FR-A- 2 310 081

## Beschreibung

Die Erfindung bezieht sich auf eine landwirtschaftliche Arbeitsmaschine, besonders einen Kreiselheuwender mit den Merkmalen des Gattungsbegriffes des Anspruches 1.

Maschinen dieser Art sind z. B. aus den Deutschen Offenlegungsschriften DE-OS 39 11 296 und DE-OS 39 26 382 bekannt. In beiden Fällen soll die Aufgabe gelöst werden, für den Straßentransport günstige Maschinenbreiten und ausreichende Fahrstabilität zu erzielen. Bei Maschinen mit sehr großen Arbeitsbreiten reichen die bekannten Ausführungsformen aber nicht aus, um zu einer voll befriedigenden Lösung der gestellten Aufgabe zu kommen.

Mit der Erfindung soll erreicht werden, daß eine Maschine nach dem Gattungsbegriff in der Arbeitsstellung eine weitestgehende Anpassung der Arbeitswerkzeuge an Unebenheiten des Erdbodens erlaubt und daß sie in der Transportstellung bei geringer Transportbreite sicher zwischen der Anbauvorrichtung des Schleppers und den Laufrädern des Fahrwerkes aufgehängt ist.

Das Erfindungsziel wird zum einen Teil dadurch erreicht, daß ein Fahrgestell vorgesehen ist, das aus einem Mittelteil besteht, mit dem um senkrechte Achsen verschwenkbare Auslegerarme verbunden sind, die mindestens je ein Laufrad tragen. Diese Ausgestaltung erlaubt es, dem Fahrgestell in der Arbeitsstellung eine breite Spurweite und in der Transportstellung eine schmale Spurweite zu geben. Nach einem bevorzugten Merkmal der Erfindung soll mit dem Mittelteil des Fahrgestells ein Mittelrahmen um quer zur Fahrtrichtung liegende Horizontalachsen verschwenkbar verbunden sein. Dieser Mittelrahmen dient als Basis für die Arbeitswerkzeuge, die mit ihm und daran angelenkten Hilfsrahmen verbunden sind und die durch die Verschwenkbarkeit in Ihrer Lage zum Erdboden verstellbar sind.

Ein weiteres bevorzugtes Merkmal der Erfindung liegt darin, daß die Arbeitswerkzeuge in 2er-Gruppen an Hilfsrahmen gelagert sind, die ihrerseits mit dem Mittelrahmen, der selbst Arbeitswerkzeuge tragen kann, oder mit einem benachbarten Hilfsrahmen gelenkig verbunden sind.

Weitere erfindungsgemäße Ausführungsformen ergeben sich aus den übrigen Unteransprüchen.

Die Erfindung wird am Beispiel eines Kreiselheuwenders mit 10 Arbeitswerkzeugen erläutert. Von 5 Abbildungen zeigen
- Fig. 1: einen Kreiselheuwender schematisch in Draufsicht, wobei auf der rechten Seite die Arbeitsstellung ausgezogen dargestellt ist, während die linke Seite die Transportstellung ausgezogen zeigt.
- Fig. 2: zeigt den gleichen Gegenstand von hinten, wobei auf der linken Seite ein Hilfsrahmen zur Vorbereitung der Transportstellung hochgeklappt ist. Die rechte Seite ist abgebrochen gezeichnet.
- Fig.3: zeigt eine Ansicht in Richtung des Pfeiles A der Figur 1, wobei das Arbeitswerkzeug in Arbeitsstellung steht.
- Fig. 4: entspricht Fig. 3, das Arbeitswerkzeug in Transportstellung.
- Fig. 5: zeigt den Erfindungsgegenstand in Richtung des Pfeiles B der Figur 1 in Transportstellung.

Ein Kreiselheuwender stützt sich auf ein Fahrgestell (1) ab, das aus einem Mittelteil (2), einer damit fest verbundenen Zugdeichsel (3) sowie zwei Auslegerarmen (4) besteht, die sich einerseits auf Laufräder (5) abstützen und andererseits durch senkrechte Gelenkbolzen (6) mit dem Mittelteil (2) verschwenkbar verbunden sind. An ihren freien Enden haben die Auslegerarme (4) senkrechte Radstützen (7), über die eine Schwenkhülse (8) gestülpt ist. Mit der Schwenkhülse (8) sind Radschwingen (9) höhenbeweglich verbunden, die an ihren freien Enden die Laufräder (5) tragen. Mittels Hubzylindern (10) können die Radschwingen (9) nach oben oder unten verschwenkt werden. Die Auslegerarme (4) haben fest mit ihnen verbundene Ansätze (11), an denen Hubzylinder (12) angreifen. Die Hubzylinder (12) sind mit ihrem anderen Ende an einer mit dem Mittelteil (2) fest verbundenen Lagerkonsole (13) angelenkt. Mittels der Hubzylinder (12) können die Auslegerarme (4) so gestellt werden, daß sie mit dem Mittelteil (2) einen nach außen offenen spitzen Winkel bilden oder so, daß sie etwa in Fahrtrichtung nach hinten zeigen. Ebenfalls mit dem Mittelteil (2) fest verbunden sind zwei nach hinten weisende Anbaulaschen (14), die Querbohrungen (15) besitzen. Die Anbaulaschen (14) bilden gleichzeitig Ankerpunkte für Hubzylinder (16).

Der Mittelrahmen (17) des Funktionsteiles des Kreiselheuwenders ist über Schwenkzapfen (18) winkelbeweglich mit den Anbaulaschen (14) des Mittelteiles (2) verbunden. Der Mittelrahmen (17) trägt zwei gegenläufig antreibbare Arbeitswerkzeuge (19) mit Zinken (20). Der Mittelrahmen (17) und mit ihm die Arbeitswerkzeuge (19) stützen sich über Tasträder (21) auf dem Erdboden ab. Der Mittelrahmen (17) ist mit dem freien Ende der Hubzylinder (16) verbunden und kann mit ihrer Hilfe um die Schwenkzapfen (18) im Winkel verstellt werden.

Mit den beiden Enden des Mittelrahmens (17) sind Zwischenglieder (22) mittels Kardangelenken (23) derart verbunden, daß sie sowohl in einer Horizontalebene, als auch in einer durch die Mittelachse des Mittelrahmens (17) verlaufende Vertikalebene gegenüber diesem verschwenkt werden können.

Hilfsrahmen (24) tragen jeweils zwei gegenläufig angetriebene Arbeitswerkzeuge (19), die sich mit Laufrädern (21) auf den Erdboden abstützen. Mit in Fahrtrichtung liegenden horizontalen Gelenkbolzen (25) sind sie einerseits mit den Zwischengliedern (22) und andererseits mit anderen Zwischengliedern (26) und diese wieder mit weiteren Hilfsrahmen (24') gelenkig verbunden.

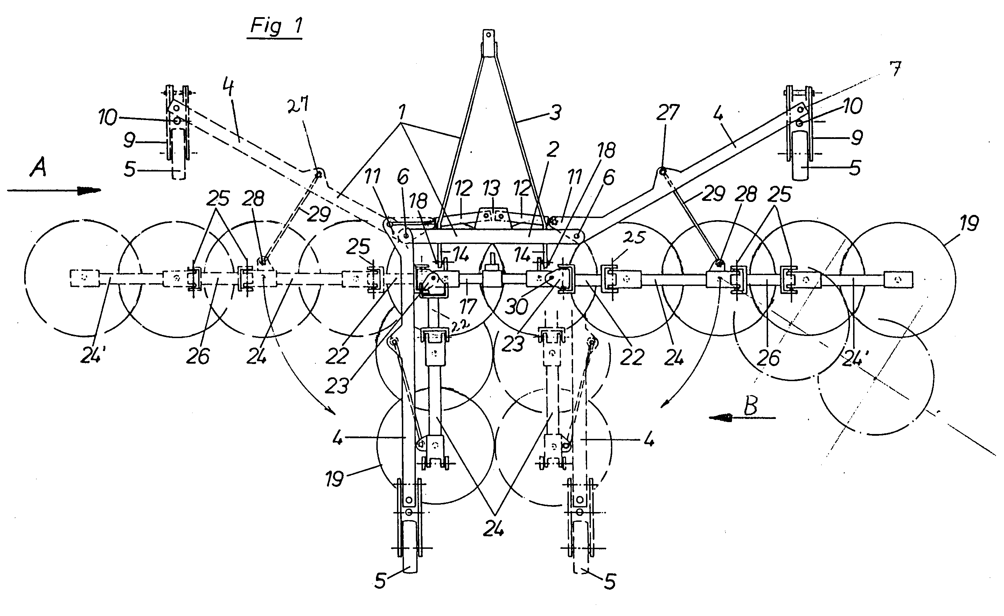

Zwischen einem Gelenkpunkt (27) an dem Auslegerarm (4) und einem Gelenkpunkt (28) an dem Hilfsrahmen (24) ist eine Koppelstange (29) eingeschaltet. In der Draufsicht (Fig. 1) entstehen dadurch Gelenkvierecke mit den Eckpunkten (6, 27, 28) und der Senkrechten Drehachse (30) des Kardangelenkes (23).

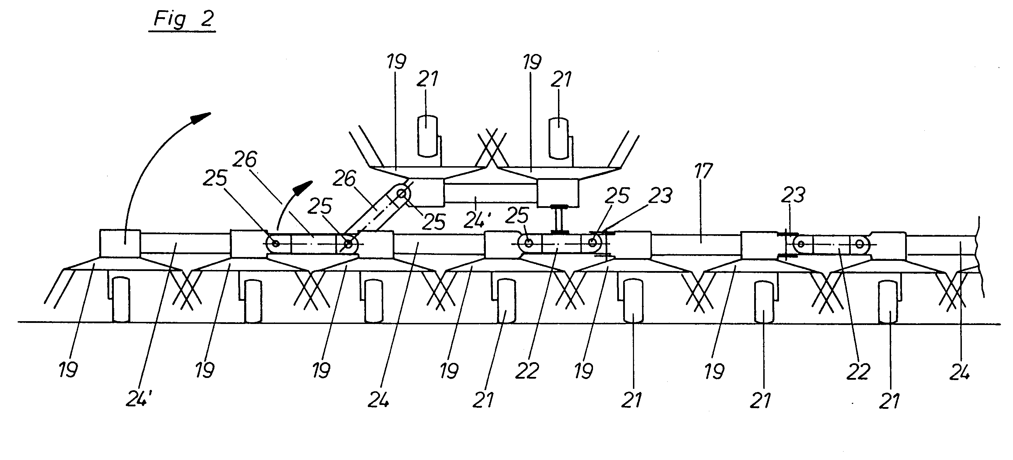

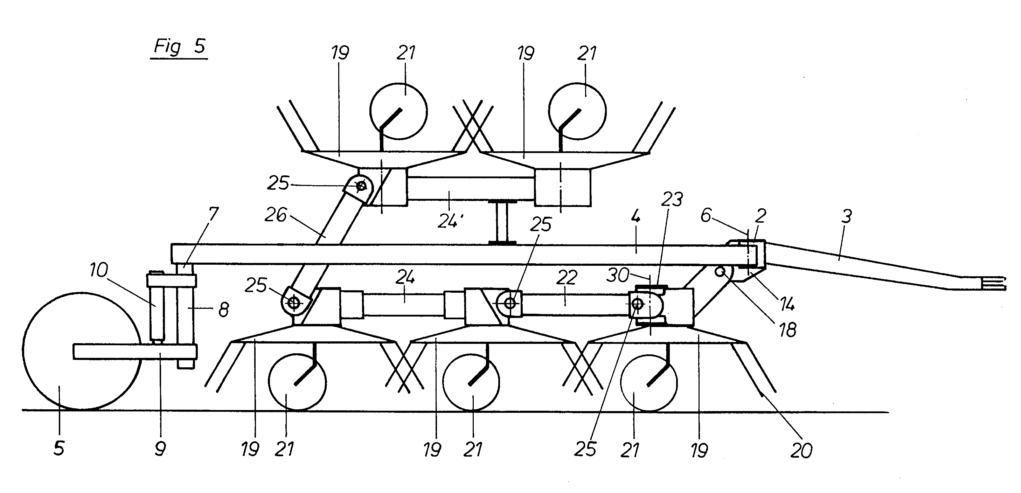

Mit bekannten und nicht dargestellten Mitteln können die beiden äußeren Zwischenglieder (26) und die mit ihnen gelenkig verbundenen äußeren Hilfsrahmen (24') so nach oben und innen geklappt werden, daß die äußeren Hilfsrahmen (24') in ausreichendem Abstand über den benachbarten Hilfsrahmen (24) festgestellt werden können (Fig. 2 und Fig. 5). Die Länge der Zwischenglieder (26) ist so gewählt, daß zwischen dem unteren Hilfsrahmen (24) und dem darüber liegenden äußeren Hilfsrahmen (24') ein solcher Abstand entsteht, daß der zur Transportstellung nach hinten verschwenkte Auslegerarm (4) zwischen beiden Hilfsrahmen (24, 24') Platz findet.

In der Arbeitsstellung stehen die beiden Auslegerarme (4) in der in Figur 1 auf der rechten Seite ausgezogen gezeichneten Stellung. In dieser Stellung hat das Fahrgestell (1) eine große Spurbreite. Zur Erreichung einer Transportstellung werden zuerst das Zwischenglied (26) und der äußere Hilfsrahmen (24') in die in Figur 5 gezeigte Stellung gebracht. Dann werden die Auslegerarme (4) um die Gelenkbolzen (6) mit den Hubzylindern (12) so nach hinten verschwenkt, daß sie die in Figur 1, linke Seite, ausgezogen gezeichnete Stellung einnehmen. Vermittels der Koppelstangen (29) drehen sich dabei selbsttätig die Zwischenglieder (22) und die Hilfsrahmen (24) um die Drehachse (30) nach hinten und nehmen eine etwa parallele Lage zu den Auslegerarmen (4) ein.

Durch die paarige Anordnung zusammenarbeitender Arbeitswerkzeuge (19> an dem Mittelrahmen (17) und an den Hilfsrahmen (24, 24') und der Einschaltung je eines Zwischengliedes (22, 26) und der Abstützung jedes Arbeitswerkzeuges (19) auf ein Stützrad (21) ist eine optimale Bodenanpassung erreicht worden. Die paarige Anordnung zusammengehöriger Arbeitswerkzeuge (19) hat außerdem den Vorteil, daß diese Funktionsgruppen bequem vormontiert und in variabler Anzahl aneinander angereiht werden können.

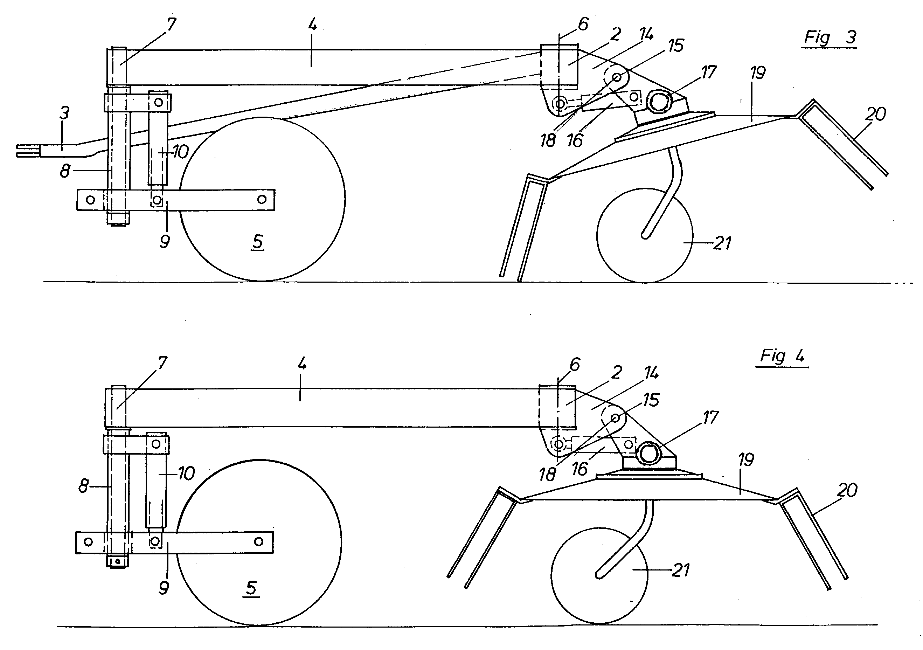

Zur Erzielung einer genügenden Bodenfreiheit in der Transportstellung können die Arbeitswerkzeuge (19) vermittels der Hubzylinder (16) in eine Stellung gebracht werden, wie sie in Figur 4 gezeigt ist. Für die Arbeitsstellung werden die Arbeitswerkzeuge (19), wie in Figur 3 gezeigt, eingestellt. Dadurch, daß die Laufräder (5) der Auslegerarme (4) mit den Hubzylindern (10) höhenverstellt werden können, ist es möglich, den Abstand der Spitzen der Zinken (20) vom Erdboden in einem gewissen Bereich unabhängig von der Neigung der Arbeitswerkzeuge (19) einzustellen.

Bei der Arbeit kann es in manchen Fällen vorkommen, daß ein seitlich über das Fahrgestell (1) hinausragender Teil der Maschine an einem Hindernis anstößt. Um hierbei eine Beschädigung an der Maschine zu vermeiden, kann eine an sich bekannte und nicht näher beschriebene Überlastsicherung vorgesehen sein, die ab einer vorbestimmten Krafteinwirkung ein Verschwenken des äußeren Hilfsrahmens (24') gegenüber dem benachbarten Hilfsrahmen (24) nach hinten erlaubt.

## Patentansprüche

1. Landwirtschaftliche Arbeitsmaschine, besonders Kreiselheuwender, mit einem Mittelrahmen und mehreren Hilfsrahmen, die in Arbeitsstellung quer zur Fahrtrichtung nebeneinander angeordnet sind und die Arbeitswerkzeuge tragen, die sich mittels Laufrädern gegen den Boden abstützen und die sich insgesamt auf ein mit einer Zugdeichsel versehenes Fahrgestell abstützen, dadurch gekennzeichnet, daß das Fahrgestell (1) aus einem Mittelteil (2) und um zum Boden gerichtete Gelenkbolzen (6) schwenkbar damit verbundenen Auslegerarmen (4) besteht, die mindestens je ein Laufrad (5) tragen.

2. Landwirtschaftliche Arbeitsmaschine nach Anspruch 1, dadurch gekennzeichnet, daß mit dem Mittelteil (2) des Fahrgestelles (1) ein Mittelrahmen (17) um eine quer zur Fahrtrichtung liegende Horizontalachse (18) schwenkbar verbunden ist.

3. Landwirtschaftliche Arbeitsmaschine nach den Ansprüchen 1 und 2, dadurch gekennzeichnet, daß die von Laufrädern (5) getragenen schwenkbaren Auslegerarme (4) des Fahrgestelles (1) in der Arbeitsstellung in Fahrtrichtung vor den Arbeitswerkzeugen (19) angeordnet sind und zur Erreichung einer Transportstellung so nach hinten verschwenkt werden können, daß die Laufräder (5) in Fahrtrichtung hinter den Arbeitswerkzeugen (19) laufen.

4. Landwirtschaftliche Arbeitsmaschine nach Anspruch 1, dadurch gekennzeichnet, daß die Arbeitswerkzeuge (19) in Zweiergruppen an Hilfsrahmen (24) angeordnet sind, die ihrerseits mit dem Mittelrahmen (17), der selbst zwei Arbeitswerkzeuge (19) tragen kann, oder mit einem benachbarten Hilfsrahmen (24') gelenkig verbunden sind.

5. Landwirtschaftliche Arbeitsmaschine, nach den Ansprüchen 3 oder 4, dadurch gekennzeichnet, daß zwischen den Mittelrahmen (17) und einen benachbarten Hilfsrahmen (24) und/oder zwischen zwei benachbarten Hilfsrahmen (24, 24') um zwei etwa in Fahrtrichtung liegende Achsen (25) schwenkbare Zwischenglieder (22, 26) derart eingeschaltet sind, daß die äußeren Hilfsrahmen (24') für die Transportstellung um etwa 180° nach oben und innen verschwenkbar sind, wobei sie in einem solchen Abstand über einem benachbarten Hilfsrahmen (24) festgestellt werden können, daß die nach hinten geschwenkten Auslegerarme (4) des Fahrgestelles (1) zwischen den Arbeitswerkzeugen (19) der äußeren (24') und den ihnen benachbarten Hilfsrahmen (24) Platz finden.

6. Landwirtschaftliche Arbeitsmaschine nach einem oder mehreren der Ansprüche 1 - 5, dadurch gekennzeichnet, daß die schwenkbaren Auslegerarme (4) des Fahrgestelles (1) über eine Koppelstange (29) gelenkig mit einem Hilfsrahmen (24) derart verbunden sind, daß die schwenkbaren Auslegerarme (4) und die Hilfsrahmen (24) zusammen mit der Koppelstange (29) und ihren Gelenkpunkten (27, 28) und Gelenkpunkten (6, 30) am Mittelteil (2) des Fahrgestelles (1) und am Mittelrahmen (17) von oben gesehen ein Gelenkviereck bilden, das bewirkt, daß in der Arbeitsstellung die schwenkbaren Auslegerarme (4) und die Hilfsrahmen (24, 24') einen nach außen offenen spitzen Winkel bilden und in Transportstellung beide etwa parallel zueinander in Fahrtrichtung nach hinten weisen.

7. Landwirtschaftliche Arbeitsmaschine nach einem oder mehreren der Ansprüche 1 - 6, dadurch gekennzeichnet, daß die Neigung der Mittelrahmen (17) relativ zu dem Mittelteil (2) veränderbar ist, und daß die Laufräder (5) an den schwenkbaren Auslegerarmen (4) relativ zu diesen höhenverstellbar sind, wodurch die Höhe der Spitzen der Zinken (20) über dem Erdboden und die Neigung der Drehachse der Arbeitswerkzeuge (19) unabhängig voneinander einstellbar sind.

8. Landwirtschaftliche Arbeitsmaschine nach einem oder mehreren der Ansprüche 1 - 7, dadurch gekennzeichnet, daß die äußeren Hilfsrahmen (24') ab einer vorbestimmten horizontalen Krafteinwirkung auf die Arbeitswerkzeuge (19) bei deren Anstoßen an einem Hindernis um etwa vertikale Achsen nach hinten schwenkbar an den benachbarten Hilfsrahmen (24 ) angeschlossen sind.

## Claims

1. An agricultural working machine, in particular a rotary hay tedder, comprising a central frame and a plurality of auxiliary frames which in the working position are arranged in juxtaposed relationship transversely to the direction of travel and which carry working implements which are supported by means of wheels against the ground and which are supported altogether on a chassis provided with a tow bar, characterised in that the chassis (1) comprises a central portion (2) and cantilever arms (4) which are connected thereto pivotably about pivot pins (6) directed towards the ground and which each carry at least one respective wheel (5).

2. An agricultural working machine according to claim 1 characterized in that a central frame (17) is connected to the central portion (2) of the chassis (1) pivotably about a horizontal axis (18) which is disposed transversely with respect to the direction of travel.

3. An agricultural working machine according to claims 1 and 2 characterized in that in the working position the pivotable cantilever arms (4) of the chassis (1), which are carried by wheels (5), are arranged in front of the working implements (19) in the direction of travel and to move into a transport position can be pivoted rearwardly in such a way that the wheels (5) run behind the working implements (19) in the direction of travel.

4. An agricultural working machine according to claim 1 characterized in that the working implements (19) are arranged in groups of twos on auxiliary frames (24) which in turn are pivotably connected to the central frame (17) which itself can carry two working implements (19), or to an adjacent auxiliary frame (24').

5. An agricultural working machine according to claim 3 or claim 4 characterized in that intermediate members (22, 26) pivotable about two axes (25) disposed substantially in the direction of travel are arranged between the central frame (17) and an adjacent auxiliary frame (24) and/or between two adjacent auxiliary frames (24, 24') in such a way that the outer auxiliary frames (24') are pivotable through about 180° upwardly and inwardly for the transport position, wherein they can be fixed at such a spacing above an adjacent auxiliary frame (24) that the rearwardly pivoted cantilever arms (4) of the chassis (1) have space between the working implements (19) of the outer auxiliary frames (24') and the auxiliary frames (24) adjacent to them.

6. An agricultural working machine according to one or more of claims 1 to 5 characterized in that the pivotable cantilever arms (4) of the chassis (1) are pivotably connected to an auxiliary frame (24) by way of a coupling bar (29) in such a way that the pivotable cantilever arms (4) and the auxiliary frames (24) together with the coupling bar (29) and their pivot points (27, 28) and pivot points (6, 30) on the central portion (2) of the chassis (1) and on the central frame (17) as viewed from above form a pivotal quadrilateral which provides that in the working position the pivotable cantilever arms (4) and the auxiliary frames (24, 24') form an outwardly open acute angle and in the transport position both face rearwardly approximately parallel to each other in the direction of travel.

7. An agricultural working machine according to one or more of claims 1 to 6 characterized in that the inclination of the central frames (17) relative to the central portion (2) is variable and that the wheels (5) are adjustable in respect of height on the pivotable cantilever arms (4) relative thereto whereby the height of the tips of the tines (20) above the ground and the inclination of the axis of rotation of the working implements (19) are adjustable independently of each other.

8. An agricultural working machine according to one or more of claims 1 to 7 characterized in that the outer auxiliary frames (24') are connected to the adjacent auxiliary frames (24) in such a way as to be pivotable rearwardly about approximately vertical axes as from a predetermined horizontal force acting on the working implements (19) when they hit against an obstacle.

## Revendications

1. Machine de travail agricole, notamment faneuse rotative , comportant un cadre médian et plusieurs cadres auxiliaires, qui dans la position de travail sont disposés côte-à-côte transversalement par rapport à la direction de déplacement et portent les outils de travail qui prennent appui sur le sol à l'aide de roues et qui s'appuient globalement sur un châssis équipé d'un timon, caractérisée en ce que le châssis (1) est constitué par une partie médiane (2) et des bras en console (4) qui sont reliés à la partie médiane de manière à pouvoir pivoter autour d'axes d'articulation (6) dirigés vers le sol et qui portent au moins chacun une roue (5).

2. Machine de travail agricole selon la revendication 1, caractérisée en ce qu'un cadre médian (17) est relié à la partie médiane (2) du châssis (1) de manière à pouvoir basculer autour d'un axe horizontal (18) qui s'étend transversalement par rapport à la direction de déplacement.

3. Machine de travail agricole selon les revendications 1 et 2, caractérisée en ce que les bras en console pivotants (4) du châssis (1) qui sont portés par des roues (5) sont disposés dans la position de travail en avant des outils de travail (19) dans la direction de déplacement et peuvent être basculés vers l'arrière pour atteindre une position de transport de telle sorte que les roues (5) roulent en arrière des outils de travail (19), dans la direction de déplacement.

4. Machine de travail agricole selon la revendication 1, caractérisée en ce que les outils de travail (19) sont disposés par groupes de deux sur des cadres auxiliaires (24) qui pour leur part sont reliés de façon articulée au cadre médian (17) qui peut porter luimême deux outils de travail (19), ou à un cadre auxiliaire voisin (24').

5. Machine de travail agricole selon les revendications 3 ou 4, caractérisée en ce que des organes intermédiaires (22,26), pouvant pivoter autour d'axes (25) s'étendant approximativement dans la direction de déplacement, sont insérés entre le cadre médian (17) et un cadre auxiliaire voisin (24) et/ou entre deux cadres auxiliaires voisins (24,24'), de telle sorte que les cadres auxiliaires extérieurs (24') peuvent être pivotés d'environ 180° vers le haut et vers l'intérieur pour la position de transport, auquel cas ils peuvent être fixés au moyen d'un cadre auxiliaire voisin (24) à une distance telle que les bras en console (4), pivotés vers l'arrière, du châssis (1) ont une place entre les outils de travail (19) des cadres auxiliaires extérieurs (24') et les cadres auxiliaires (24) voisins de ces outils.

6. Machine de travail agricole selon une ou plusieurs des revendications 1 - 5, caractérisée en ce que les bras en console pivotants (4) du châssis (1) sont reliés de façon articulée, au moyen d'une barre d'accouplement (29), à un cadre auxiliaire (24) de telle sorte que les bras en console pivotants (4) et les cadres auxiliaires (24) forment conjointement avec la barre d'accouplement (29) et leurs points d'articulation (27,28) et des points d'articulation (6,30) sur la partie médiane (2) du châssis (1) et sur le cadre médian (17), selon une vue en plan, un quadrilatère articulé qui agit de telle sorte que, dans la position de travail, les bras en console pivotants (4) et les cadres auxiliaires (24,24') font un angle aigu ouvert vers l'extérieur et, dans la position de transport, sont dirigés tous deux approximativement parallèlement l'un à l'autre dans la direction de déplacement.

7. Machine de travail agricole selon l'une ou plusieurs des revendications 1 - 6, caractérisée en ce que l'inclinaison des cadres médians (17) par rapport à la partie médiane (2) est modifiable et que les roues (5) situées sur les bras en console pivotants (4) sont réglables en hauteur par rapport à ces derniers, ce qui permet de régler indépendamment l'une de l'autre la hauteur des pointes des dents (20) au-dessus du sol et l'inclinaison de l'axe de rotation des outils de travail (19).

8. Machine de travail agricole selon une ou plusieurs des revendications 1 - 7, caractérisée en ce que les cadres auxiliaires extérieurs (24') sont raccordés de manière à pouvoir pivoter vers l'arrière, autour d'axes verticaux, sur les cadres auxiliaires voisins (24), à partir du moment où une force horizontale prédéterminée agit sur les outils de travail (19), lorsqu'ils heurtent un obstacle.
